# NEUE EUROPÄISCHE PATENTSCHRIFT

(11) **EP 0 698 720 B2**
(45) Veröffentlichungstag und Bekanntmachung des Hinweises auf die Entscheidung über den Einspruch: **28.06.2006**
(45) Hinweis auf die Patenterteilung: 01.09.1999
(21) Anmeldenummer: 95110004.9
(22) Anmeldetag: 27.06.1995
(51) Int. Cl.: E06B 3/972

(54) **Verfahren zum Befestigen von Eckverbindern, vorzugsweise aus verschweissbarem Kunststoff, und Eckverbinder zur Verwendung bei einem solchen Verfahren**
Fixing method for corner assembly members, preferably of weldable plastics, and corner member used therefor
Procédé de fixation d'équerres d'assemblage, de prérérence en matière plastique soudable, ainsi qu'équerres y afférant

(30) Priorität: 22.08.1994 DE 4429709
(43) Veröffentlichungstag der Anmeldung: 28.02.1996
(73) Patentinhaber: PHI Reichel GmbH, 91452 Wilhermsdorf (DE)
(72) Erfinder: Reichel, Johann Friedrich, D-90768 Fürth (DE)
(74) Vertreter: Geyer, Fehners & Partner

(56) Entgegenhaltungen:
- EP-A- 0 415 394
- DE-U- 8 910 401
- DE-U- 9 113 235

## Beschreibung

Die Erfindung bezieht sich auf ein Verfahren zum Befestigen von Eckverbindern, vorzugsweise aus verschweißbarem Kunststoff, in auf Gehrung geschnittenen Hohlkammerprofilen von Fenster, Türen oder dgl., bei dem jeder Eckverbinder mit einem Schaftteil in ein zugeordnetes Hohlkammerprofil formschlüssig eingeschoben und in diesem mit einer dessen Gehrung entsprechenden Schrägfläche in Ausrichtung zur Gehrungsfläche des Hohlkammerprofiles mittels eines als Spannkeil wirkenden Schiebekörpers selbsthemmend verkeilt wird, wobei der Schiebekörper zwischen einer Seitenfläche des Schaftteiles des Eckverbinders und der zugeordneten Innenwand des Hohlkammerprofiles mit mit mindestens einer an ihm ausgebildeten Keilfläche entlang mindestens einer zugeordneten, an der Seitenfläche des Schaftteiles angebrachten Schrägfläche mittels eines an ihm angebrachten, vorstehenden Endabschnitts relativ zum Schaftteil bis zum Erreichen der gewünschten Verkeilung verschoben und anschließend der überstehende Endabschnitt abgetrennt wird. Die Erfindung bezieht sich ferner auch noch auf einen Eckverbinder zum Verbinden zweier auf Gehrung geschnittener, vorzugsweise aus verschweißbarem Kunststoff bestehender Hohlkammerprofile von Fenster, Türen oder dgl., wie er insbesondere zur Verwendung bei einem solchen Verfahren eingesetzt werden kann.

Eckverbinder dienen dazu, zwei auf Gehrung geschnittene Hohlkammerprofile, in denen sie fixiert sind, miteinander zu verbinden. Zum Fixieren der Eckverbindern in den Hohlkammerprofilen sind verschiedene Befestigungsverfahren bekannt:
Die einfachste Methode besteht darin, den betreffenden Eckverbinder mit etwas Übermaß in das zugehörige Hohlkammerprofil einzuschlagen und ihn dort zusätzlich durch Schrauben noch zu fixieren. Das Einschlagen, üblicherweise mit einem Hammer, läßt jedoch ein genaues Ausrichten der schrägen Endflächen des Eckverbinders zur Gehrungsfläche des Hohlkammerprofiles kaum zu, was zu Schwierigkeiten beim späteren Verschweißen oder Verkleben führen kann. Zudem ist diese Art der Montage (Befestigung) des Eckverbinders zeitaufwendig und damit kostenintensiv.

Es ist auch bekannt, die Eckverbinder mit ihrem Schaftteil in das zugeordnete Hohlkammerprofil formschlüssig einzuführen, bis die Schrägfläche des Eckverbinders zur Gehrungsfläche des Hohlkammerprofils ausgerichtet ist, und den Eckverbinder dann im Hohlkammerprofil durch eine geeignete Spreizeinrichtung zu verspreizen. Ein solches Verfahren wird z. B. in der DE-PS 37 12 478 beschrieben: dort ist zentral im Eckverbinder in dessen Längsrichtung ein durchgehender Kanal vorgesehen und im einschiebeseitigen Endbereich des Eckverbinders sind Längsnuten angebracht. Durch den Längskanal ist eine lange Schraube hindurchgeführt, die am einschiebeseitigen Ende des Eckverbinders in ein Spreizteil eingeschraubt ist, das seinerseits beim Anziehen der Schraube langsam in den Eckverbinder hineingezogen wird und dabei die zwischen den Längsnuten ausgebildeten Gehäusebereiche des Eckverbinders nach außen hin gegen das Hohlkammerprofil verspreizt.

Im DE-GM 89 10 401 und der entsprechenden EP 0 415 394 A2 wird ebenfalls ein durch Aufspreizung in einem zugeordneten Kunststoff-Hohlkammerprofil zu fixierender Eckverbinder beschrieben, bei dem wiederum über eine durch ihn in Längsrichtung hindurchragende Schraube ein auf der Oberseite des Eckverbinders sitzender Spannkeil angezogen und dabei nach außen verspreizt wird.

Solche Befestigungsverfahren, bei denen die Keilwirkung über von Schrauben bewegte Keile ausgelöst wird, setzen jedoch einen relativ komplizierten, mehrteiligen, Kunststoff- und Metallteile umfassenden Eckverbinder voraus, der kostenaufwendig ist. Zudem ist die Montage relativ schwierig, da der beim Anziehen der jeweiligen Stellschraube zwangsläufig auf diese vom Benutzer ausgeübte Druck die Gefahr eines gewissen Hineinwandems des Eckverbinders in das Hohlprofil mit sich bringt. Wird dabei zu stark auf die Schraube gedrückt, geht die vorher erreichte Ausrichtung zwischen Gehrungsfläche des Hohlkammerprofiles und Schrägfläche des Eckverbinders verloren, so daß dann eine Verschweißung oder Verklebung der Schrägflächen zweier so fixierter Eckverbinder in der Gehrungsfläche der zu verbindenden Hohlkammerprofile nicht mehr sichergestellt ist, weshalb die Schraube an den betreffenden Eckverbindern wieder etwas gelöst, derjeweils Eckverbinder erneut mit seiner Schrägfläche in Ausrichtung zur Gehrungsfläche des Hohlkammerprofiles gebracht und anschließend wieder festgezogen werden muß.

Aus der DE-PS 42 15 661 ist ein Verfahren zur Befestigung von Eckverbindern in Hohlkammerprofilen von Tür- oder Fensterrahmen bekannt, bei dem ebenfalls ein Spannkeil eingesetzt wird, der seine Spannwirkung jedoch durch eine Bewegung quer zur Einschieberichtung des Eckverbinders in das Hohlkammerprofil aufbaut. Um diesen Spannkeil auf der Oberseite des Eckverbinders bei in das Hohlkammerprofil eingeschobenem Eckverbinder verspannen zu können, ist an der Schrägfläche des Eckverbinders eine Öffnung vorgesehen, durch die in Längsrichtung ein kleiner Treibkeil eingeschlagen werden kann, der mit zunehmendem Einschieben den Spannkeil am Eckverbinder seitlich verschiebt und damit die gewünschte Verspannung bewirkt. Doch auch hier besteht die erhebliche Gefahr eines unerwünschten Hineinwanderns des Eckverbinders beim Einschlagen des Treibkeiles durch Hammerschlag, da die hierbei auftretenden Stoßkräfte auch bei einem eventuell schon erreichten etwas festeren Sitz des Eckverbinders im Hohlkammerprofil noch immer ein Einwandern des Eckverbinders in das Hohlkammerprofil auslösen können. Bei diesem bekannten Eckverbinder können die drei verschiedenen Einzelteile zwar aus Kunststoff gefertigt werden, so daß zusätzliche metallische Elemente nicht mehr erforderlich sind. Die Gesamtmontage ist jedoch wieder relativ ungenau und schwierig und verlangt eine besondere Geschicklichkeit der montierenden Person.

Aus dem DE-U-91/13235 ist ein Befestigungsverfahren für einen Eckverbinder bekannt, bei dem die Verkeilwirkung durch einen an einer Seite des Eckverbinders angebrachten Schiebekörper erreicht wird, der als Spannkeil wirkt und zu Befestigung des Eckverbinders zwischen diesem und dem Kunststoff-Hohlkammerprofil selbsthemmend verkeilt wird. Zu diesem Zweck ist der Schiebekörper mit zwei Keilflächen versehen, über die er sich auf zwei einer an der zugeordneten Seitenfläche am Schaftteil des Eckverbinders entsprechend angebrachten Schrägflächen abstützt. Der Schiebekörper weist einen über die Gehrungsfläche vorstehenden Endabschnitt auf, über den er bei in das Hohlkammerprofil eingestecktem Eckverbindervon dessen Schrägseite her relativ zu diesen verschoben werden kann, indem z. B. mittels Hammerschlägen die gewünschte Verkeilung des Schiebekörpers zwischen Eckverbinder und Hohlkammerprofil erzeugt wird. Ist die gewünschte Verkeilwirkung erreicht, wird der außen über die Gehrungsfläche noch überstehende Rest des Endabschnitts mit dem Hammer abgeschlagen, wonach die Verschweißung zweier mit solchen Eckverbindern versehener Hohlkammerprofile zu einer Fenster- oder Türecke o.ä. erfolgen kann. Um beim Einschlagen des Schiebekörpers mittels eines Hammers ein unerwünschtes Hineinwandern des Eckverbinders in das Hohlkammerprofil zu verhindern, ist an diesem bekannten Eckverbinder an dessen Schrägfläche mindestens ein seitlich über diese bis auf die Gehrungsfläche des den Eckverbinder umgebenden Hohlkammerprofils vorstehender Anschlag ausgebildet, der auch bei Schlägen auf den Schiebekörper die Ausrichtung des eingeführten Eckverbinders zu Gehrungsfläche des Hohlkammerprofils sicherstellt. Allerdings kann es bei sehr starken Schlägen doch dazu kommen, daß gelegentlich die Halteanschlägen abbrechen. Zudem muß jeder Halteanschlag nach der Verkeilung des Schiebekörpers extra entfernt werden, um eine gewünschte flächige Verschweißung oder Verklebung in der Gehrungsfläche sicherzustellen, was ebenfalls eine Verkomplizierung bei der Montage bedeutet. In dieser Druckschrift wird auch ganz allgemein nach erwähnt, daß die Verkeilung auch durch Zugeinwirkung am Endabschnitt des Schiebekörpers erfolgen kann. Irgendwelche weitere Ausführungen zu dieser Lösung finden sich in der Druckschrift jedoch nicht.

Ausgehend von der DE-U-91/13 235 liegt der Erfindung die Aufgabe zugrunde, ein gattungsgemäßes Verfahren zur Befestigung von Eckverbindern in Hohlkammerprofilen so zu verbessern, daß unter Beibehaltung einer präzisen Ausrichtung der Schrägfläche des Eckverbinders zur Gehrungsfläche des Hohlkammerprofiles nach beendeter Montage keine Anschläge mehr entfernt werden müssen und somit eine vereinfachte und beschleunigte Montage erreicht wird.

Erfindungsgemäß wird dies bei einem gattungsgemäßen Montageverfahren dadurch erreicht, daß der Schiebekörper zum Verkeilen entgegen der Einschieberichtung des Eckverbinders in das Hohlkammerprofil relativ zum Eckverbinder verschoben wird, wobei der Schiebekörper zum Aufbringen der Verkeilungskraft an seinem über die Schrägfläche vorstehenden Endabschnitt mit einem Zugwerkzeug erfaßt wird, das einen sich quer zur Zugkraftrichtung über die gesamte Breite der Schrägfläche des Eckverbinders hinweg bis auf die Gehrungsfläche des Hohlkammerprofiles erstreckenden Stützabschnitt aufweist, mit dem es sich beim Aufbringen der Verkeilungszugkraft auf dieser Gehrungsfläche abstützt, wobei die Schrägfläche des Eckverbinders in ihrer zur Gehrungsfläche des Hohlkammerprofiles ausgerichteten Position gegen das Zugwerkzeug zur Anlage kommt und sich an diesem abstützt.

Bei dem erfindungsgemäßen Verfahren wird somit prinzipiell ein Spannkeil eingesetzt, der zwar ebenfalls in Längsrichtung des Eckverbinders relativ zu diesem zum Aufbringen der gewünschten Keilwirkung längs Verkeilungsflächen verschoben wird. Im Gegensatz zu allen bekannten Lösungen wird hierbei jedoch die zum Auslösen der Verkeilungswirkung erforderliche Relativbewegung des Schiebekörpers so ausgeführt, daß sie nicht in Einschieberichtung des Eckverbinders in das Hohlkammerprofil hinein, sondern in der entgegengesetzten Richtung verläuft. Der Schiebekörper wird also bei in das Hohlkammerprofil eingeschobenem Eckverbinder wieder aus dem Hohlkammerprofil "herausgezogen", damit die gewünschte selbsthemmende Verkeilungswirkung auftritt. Dies wird bei der Erfindung durch den Einsatz eines Zugwerkzeugs erreicht, das sich zum einen beim Aufbringen der erforderlichen Zugkraft seitlich der Schrägfläche des Eckverbinders auf der dort umlaufenden Gehrungsfläche des Hohlkammerprofiles abstützt, wobei dieses Werkzeug aber gleichzeitig auch noch dafür eingesetzt wird, die bei einer solchen aus dem Hohlkammerprofil herauslaufenden Verschiebebewegungen des Schiebekörpers ebenfalls ausgelöste Bewegung des Eckverbinders in Richtung aus dem Hohlkammerprofil heraus genau dann, wenn die Schrägfläche des Eckverbinders mit der Gehrungsfläche des Hohlkammerprofiles exakt ausgerichtet ist, zu Ende zu bringen. Das Werkzeug dient hier also nicht nur dazu, die Zugkraft, die auf den Schiebekörper aufgebracht wird, gegenüber der Gehrungsfläche des Hohlkammerprofils abzustützen, sondern wird zusätzlich auch noch als Anschlag für die Schrägfläche des Eckverbinders eingesetzt derart, daß diese in genauer Ausrichtung zur Gehrungsfläche des Hohlkammerprofiles gehalten wird. Damit wird sichergestellt, daß auch bei Aufbringen einer sehr starken Zugkraft auf den Schiebekörper zum Erzielen einer großen Verkeilungskraft zwischen Eckverbinder und Hohlkammerprofil dennoch eine unerwünschte, die Schrägfläche des Eckverbinders aus der Gehrungsebene des Hohlkammerprofiles herausführende Relativbewegung des Eckverbinders zum Hohlkammerprofil unterbleibt, unabhängig davon, wie groß die von dem Werkzeug aufgebrachte Zugkraft ist. Hat man die gewünschte Verkeilwirkung erreicht, wird das Werkzeug abgenommen und anschließend der überstehende Endabschnitt des Schiebekörpers, der bevorzugt mit einer oder mehreren geeigneten Sollbruchstellen versehen sein kann, z. B. durch Abschlagen oder Abbrechen oder wieder unter Verwendung des Zugwerkzeuges entfernt, indem er, noch in Eingriff mit diesem, z. B. durch Verdrehen des Zugwerkzeugs um seine Längsachse, abgeschert wird.

Bei Anwendung des erfindungsgemäßen Verfahrens kann mit einfachen Mitteln und einfach ausgebildeten Teilen eine sehr wirksame Fixierung des Endverbinders durch Verkeilung im zugeordneten Hohlkammerprofil des Fensters, der Türe oder dgl. bei gleichzeitig präziser Ausrichtung der Schrägfläche des Eckverbinders mit der Gehrungsebene des Hohlkammerprofiles erreicht werden, wobei sehr große Verkeilungskräfte aufbaubar sind. Zudem ist die Fixierung rasch durchführbar, bedarf keiner besonderen Geschicklichkeit und kann auch von ungeübten Personen ohne jede Schwierigkeit schnell vorgenommen werden. Dabei müssen auch keine Metall- und Kunststoffteile nebeneinander ingesetzt werden, wobei, besonders bevorzugt, sowohl der Eckverbinder, wie auch der Schiebekörper als einstückige Kunststoffteile aus verschweißbarem oder verklebbarem Kunststoff, insbesondere als Kunststoff-Spritzgußteile, hergestellt sein können.

Die Erfindung ermöglicht ein überraschend einfaches Verfahren zur Befestigung von Eckverbindern in Hohlkammerprofilen einfach und preisgünstig herstellbaren Teilen bei gleichzeitig ganz präziser Ausrichtung der Schrägfläche des Eckverbinders zur Ebene der Gehrungsfläche des Hohlkammerprofiles, ohne daß irgendwelche speziellen, nachträglich erst noch zu entfernenden Anschläge am Eckverbinder angebracht sein müssen.

In besonders bevorzugter Ausgestaltung des erfindungsgemäßen Verfahrens stützt sich das Zugwerkzeug beim Aufbringen der Verkeilungszugkraft beidseits des Eckverbinders an der Gehrungsfläche des Hohlkammerprofiles ab, wenngleich auch nur eine einseitige Abstützung in bestimmten Anwendungsfällen durchaus sinnvoll sein kann.

Beim erfindungsgemäßen Montageverfahren kann der Schiebekörper an jeder beliebigen der vier Seitenflächen des Schaftteiles des Eckverbinders eingesetzt sein. Besonders bevorzugt wird er jedoch an der "oberen" Seite des Eckverbinders vorgesehen, d.h. an der Seitenfläche des Eckverbinders, die von dessen Schrägfläche - im Längsschnitt des Eckverbinders gesehen - unter einem stumpfen Winkel abläuft (es handelt sich hierbei also um die "kürzeste" Seitenfläche des Eckverbinders).

Das erfindungsgemäße Verfahren wird vorzugsweise dadurch weitergebildet, daß als Zugwerkzeug ein länglicher Hebel eingesetzt wird, der an seinem einen Ende eine Einrichtung zum Erfassen des Endabschnitts des Schiebekörpers und einen gewölbten Stützabschnitt aufweist, mit dem er nach Ergreifen des Schiebekörpers an die Gehrungsfläche des Hohlkammerprofils ängelegf und um den er zum Aufbringen der Verkeilungszugkraft unter Abstützung an der Gehrungsfläche verschwenkt werden kann.

Besonders bevorzugt wird ein Schiebekörper eingesetzt, dessen Endabschnitt in Form einer Zunge mit einer Verdickung an ihrem freien Ende, vorzugsweise in Form eines beidseitig überstehenden Querbalkens, ausgebildet ist, wobei die Einrichtung zum Erfassen des Endabschnitts des Schiebekörpers zwei parallele, am gewölbten Stützabschnitt angebrachte Gabelzinken umfaßt, zwischen welche die Zunge im Bereich vor ihrer Verdickung eingeführt und beim Verschwenken des Zugwerkzeugs um den gewölbten Stützabschnitt die Verschwenkbewegung über die Verdickung der zwischen den Gabelzinken aufgenommenen Zunge in eine Zugbewegung des Schiebekörpers umgesetzt wird. Hierdurch läßt sich mit besonders einfachen Mitteln eine gut wirksame, rasche und auch für ungeübte Personen unschwer durchführbare Montage des Eckverbinders erreichen.

Die Erfindung bezieht sich ferner auch noch auf Eckverbinder zum Verbinden zweier auf Gehrung geschnittener, vorzugsweise aus verschweißbarem Kunststoff bestehender Hohlkammerprofile von Fenstern, Türen oder dgl, vorzugsweise durch Verschweißen oder Verkleben, wie sie insbesondere bei dem geschilderten erfindungsgemäßen Verfahren eingesetzt werden können. Dabei ist der Eckverbinder mit einem Schaftteil zur Einführung in ein zugeordnetes Hohlkammerprofil, einer an diesem angebrachten Schrägfläche und mit einem Schiebekörper versehen, der mit mindestens einer an ihm vorgesehenen Keilfläche auf wenigstens einer entsprechend zugeordneten, an einer Seitenfläche des Schaftteiles ausgebildeten schrägen Stützfläche relativ zum Schaftteil verschiebbar ist und einen Veirkeilungs abschnitt sowie einen über die Schrägfläche des Schaftteiles überstehenden, in Form einer Zunge ausgebildeten mit einer geringeren Breite als der Verkeilungsabschnitt von diesem vorstehenden Endabschnitt zum Aufbringen der Verschiebekraft auf das in das Hohlkammerprofil eingesetzte Schaftteil aufweist, wobei die Paarung von schräger Stützfläche und Keilfläche gegenüber Kräften senkrecht zur Verschiebebewegung des Schiebekörpers selbsthemmend ausgeführt ist. Dabei sind die Schrägen der mindestens einen Keilfläche am Schiebekörper und der mindestens einen zugeordneten schrägen Stützfläche am Schaftteil - in Einschieberichtung des Schaftteiles in das Hohlkammerprofil gesehen - zur Längsmittelebene des Schaftteiles hin abfallend ausgebildet, d.h. so ausgebildet, daß sie bei einem Verschieben des Schiebekörpers entgegen der Einschieberichtung des Schaftteiles in das Hohlkammerprofil auf dem Keil hochlaufen und so die gewünschte Spreizwirkung erzielen. Zudem weist der Endabschnitt an seinem vorstehenden Ende einer beiderseits überstehenden T-förmigen Endsteg auf. Bevorzugt ist dabei mindestens eine Keilfläche am Schiebekörper und/oder mindestens eine schräge Stützfläche am Schaftteil mit einer quer zur Richtung der Relativbewegung zwischen Schiebekörper und Schaftteil angebrachten Riffelung versehen, durch die beim Verkeilen ein besonders sicherer Verkeilungssitz und damit eine rasch eintretende und gute wirksame Selbsthemmung erreicht wird. Vorzugsweise sind dabei zwei Keilflächen am Schiebekörper und zwei entsprechend zugeordnete schräge Stützflächen am Schaftteil vorgesehen, wobei, erneut vorzugsweise, eine Keilfläche nahe bei der Schrägfläche des Eckverbinders und die andere Keilfläche an dem in Einschieberichtung in das Hohlkammerprofil vorderen Endbereich des Schaftteiles ausgebildet sind.

Eine weitere vorzugsweise Ausgestaltung der Erfindung besteht darin, daß der vorstehende Endabschnitt des Schiebekörpers mit einer Sollbruchstelle versehen ist. Die Sollbruchstelle ist dabei so ausgebildet, daß sie nach Erreichen der endgültigen Verkeilstellung beim Abtrennen des dann noch überstehenden Teiles des Endbereichs des Schiebekörpers bei einem quer zur Bewegungsrichtung desselben geführten Hammerschlag oder beim Abdrehen mittels des Zugwerkzeugs als Sollbruchstelle wirkt, während sie beim Aufbringen der Verkeilungs-Zugkraft jedoch die volle Übertragung der angelegten Zugkraft sicherstellt, ohne daß dabei die Gefahr eines Abreißens besteht.

Ganz besonders bevorzugt werden das Schaftteil und der Schiebekörper des Eckverbinders jeweils als einstückige Kunststoffteile, vorzugsweise als Kunststoff-Spritzgußteile aus verschweiß- bzw. verklebbarem Kunststoff, ausgebildet.

Die Erfindung wird nachfolgend anhand der Zeichnung im Prinzip beispielshalber noch näher erläutert. Es zeigen:
Fig. 1 eine gehrungsseitige Perspektivansicht des Endabschnitts eines Kunststoff-Hohlkammerprofiles eines Fensters mit eingeschobenem Eckverbinder (ohne Schiebekörper);
Fig. 2 einen erfindungsgemäßen Eckverbinder mit Schiebekörper (in Explosionsdarstellung);
Fig. 3 einen Längs-Mittelschnitt durch den Eckverbinder aus Fig. 2 längs A-A;
Fig. 4 einen Längsschnitt durch das Schiebeteil aus Fig. 2;
Fig. 5 eine perspektivische Längs-Mittelschnittdarstellung durch einen in das Ende eines Hohlkammerprofiles eines Fensters eingeführten erfindungsgemäßen Eckverbinder mit Schiebekörper und vorne angesetztem Montagewerkzeug in Montage-Ausgangsstellung;
Fig. 6 eine Perspektivansicht des in Fig. 5 gezeigten Montagewerkzeugs, und
Fig. 7 die Schnittdarstellung aus Fig. 5, jedoch in verkeiltem Zustand des Schiebestücks nach Verschwenkung des Montagewerkzeugs um etwa 90°.

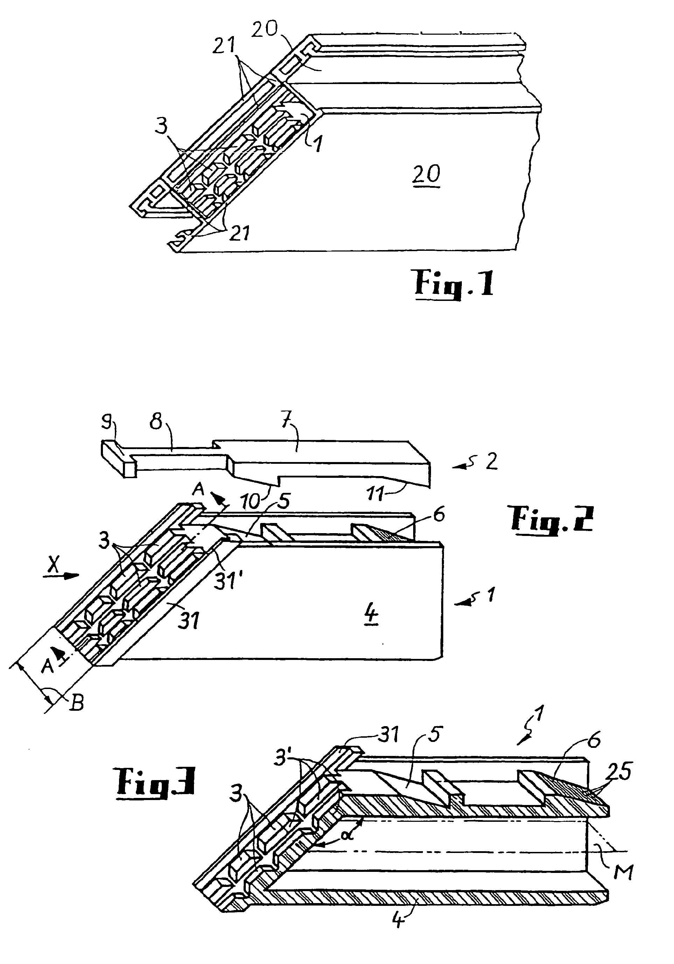

In Fig. 1 ist in perspektivischer Darstellung ein Eckverbinder 1 gezeigt, der von der Seite der Gehrungsfläche 21 eines Kunststoff-Hohlkammerprofils 20 eines Fenster- oder Türrahmens (oder auch eines Klappladens o.ä.) in dieses formschlüssig soweit eingeschoben ist, daß die an dem der Einschieberichtung abgewandten Ende des Eckverbinders 1 ausgebildete Schrägfläche 3 gleicher Neigung wie die Neigung der Gehrungsfläche 21 des Hohlkammerprofils 20 zu letzterer in ihrer Lage ausgerichtet ist.

Wie aus Fig. 1 ersichtlich ist, setzt sich die Schrägfläche 3 am Eckverbinder 1 aus einer Vielzahl von einzelnen Teilflächen zusammen, deren jede jeweils die obere Endfläche einer kleinen Erhebung 3' darstellt, wobei diese Erhebungen in parallelen Gruppen, wie aus Fig. 1 gut entnehmbar, angebracht sind.

Die Fig. 1 zeigt zunächst zur klareren Darstellung den Eckverbinder 1 ohne den für dessen Fixierung im Hohlkammerprofil 20 erforderlichen Schiebekörper.

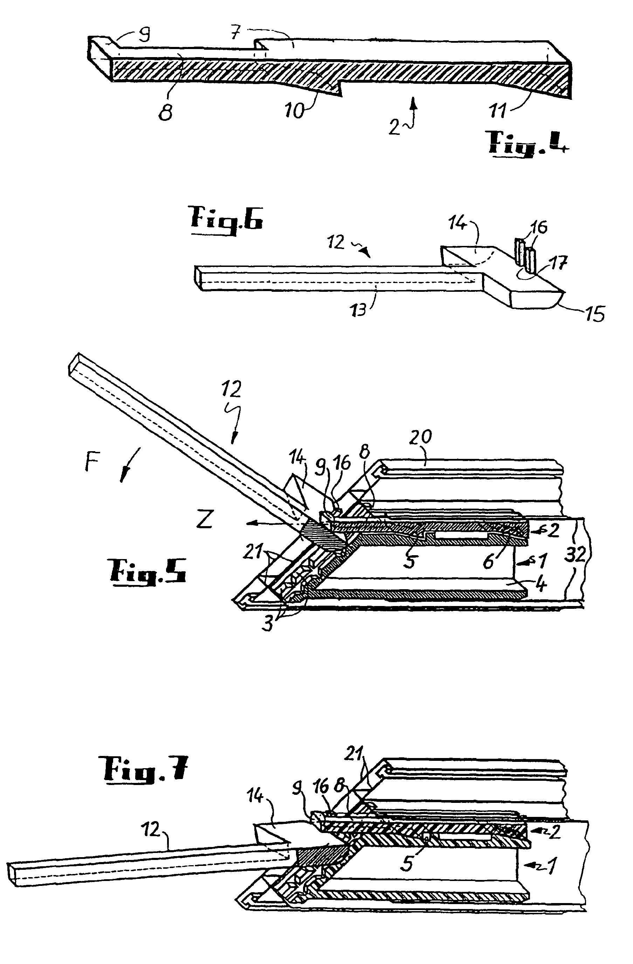

Fig. 2 zeigt nun in einer perspektivischen Explosionsdarstellung den Eckverbinder 1 und den ihmzugeordnete Schiebekörper 2. Dabei weist der Eckverbinder 1 ein Schaftteil 4 auf, mit dem er formschlüssig in das Hohlkammerprofil 20 eingesteckt und geführt werden kann. An dem der Einschieberichtung X des Eckverbinders 1 abgewandten Ende des Schaftteils 4 ist eine Schrägfläche 3 ausgebildet, die an ihren beiden seitlichen Begrenzungen mit seitlich überstehenden Anschlagleisten 31 versehen ist, die beim Einschieben des Eckverbinders 1 in das Hohlkammerprofil 20 dieses Ende seitlich in der Hohlform des Hohlkammerprofils führen, während das Schaftteil 4 in einem in Einschieberichtung X etwas nach hinten im Hohlkammerprofil 20 versetzt angebrachten metallischen Formrohr 32 (vgl.z. B. Fig. 5) geführt wird.

Auf der in Fig. 2 oberen Seite des Eckverbinders 1, d.h. auf der Seite, die im Längsquerschnitt des Eckverbinders unter einem stumpfen Winkel α von dessen Schrägfläche 3 aus vorspringt (und die gleichzeitig die kürzeste Längs-Seite aller vier Seiten des Eckverbinders darstellt) sind, wie Fig. 2 zeigt, zwei schräge, keilförmige Stützflächen 5, 6 angeordnet ist, wobei die Keilfläche 5 nahe an der Schrägfläche 3 und die Keilfläche 6 am einschiebeseitigem Endbereich des Eckverbinders 1 angeordnet sind. Dabei ist die letztgenannte Keilfläche 6 mit einer senkrecht zur Einschieberichtung X angebrachten Riffelung 25 versehen, wie dies aus Fig. 3 besonders gut erkennbar ist.

Aus der Längsmittelschnitt-Darstellung der Fig. 3 durch den Eckverbinder 1 (entlang Schnittebene A-A in Fig. 2) ist noch einmal die relative Anordnung der schrägen Stützflächen 5 und 6 sowie das Anbringen der Quer-Riffelung 25 und die Anordnung der Erhebungen 3', deren obere Endflächen die Schrägfläche 3 ausbilden, gut erkennbar. Aus der perspektivischen Schnittdarstellung der Fig. 3 ist ferner entnehmbar, daß der Eckverbinder 1 als ein einstückig gefertigtes Kunststoffteil ausgebildet ist, das seinerseits im Inneren einen Hohlquerschnitt aufweist, der zum einschubseitigen Ende des Schaftteiles 4 hin offen ist.

Der Schiebekörper 2, der dem Eckverbinder 1 zugeordnet ist, besteht seinerseits, wie die Fig. 2 oder die Längsschnittdarstellung in Fig. 4 zeigen, aus einem länglichen Formkörper, der einen Verkeilungsabscnnitt 7 und einen Endabschnitt 8 umfaßt. Der Endabschnitt 8 ist dabei in Form eines länglichen Stabes bzw. einer länglichen Zuge ausgebildet und an seinem freien Ende mit einem beidseits überstehenden, T-förmigen Endsteg (9) versehen, der in Längsrichtung des Schiebekörpers 2 gesehen gegenüber der Breite des Endabschnitts 8 eine seitliche Verdickung ausbildet.

Auf der Unterseite des Schiebekörpers sind ist im Bereich des Verkeilungsabschnitts 7 an seiner dem Schaftteil 4 bei der Montage zugewandten Unterseite zwei Keilflächen 10, 11 angebracht, deren Schräge und deren Abstand voneinander genau den Schrägen der schrägen Stützfläche 5 und 6 am Schiebekörper 1 sowie deren Zwischenabstand entspricht. Die Neigungen der Teilflächen 10 und 11 und die der keilförmigen Stützflächen 5 und 6 sind alle gleich groß ausgebildet. Dabei ist die Ausrichtung der schrägen Stützflächen 5 und 6 auf dem Eckverbinder 1 ebenso wie der die zugeordneten Keilflächen 10 und 11 am Schiebekörper 2 so vorgenommen, daß bei Aufliegen der Keilfläche 10 auf der schrägen Stützfläche 5 und der Keilfläche 11 auf der schrägen Stützfläche 6 eine Bewegung des Schiebekörpers 2 entgegen der Einschieberichtung X des Eckverbinders 1 durch Keilwirkung zu einem relativen Abheben des Schiebekörpers 2 vom Eckverbinder führt. Oder in anderen Worten: die Neigung der Schrägen ist derart ausgebildet daß diese, in Einschieberichtung X des Schaftteiles 4 gesehen, zur Längsmittelebene M (vgl. Fig. 3) des Schaftteiles 4 hin abfallen. Die Breite des Gleitstücks 2 entspricht dabei der Breite der schrägen Stützflächen 5 und 6, d.h. dem Abstand zwischen den oben hochgezogenen Seitenwänden des Schaftteiles 4, zwischen denen die Stützflächen 5 und 6 etwas vertieft angeordnet sind. Dabei wird im aufgelegten Zustand des Schiebekörpers 2 oben an Schaftteil 4 auch eine seitliche Führung desselben erreicht, wenn dieser über seinen Endabschnitt 8 und dessen vorderen Quersteg 9 in Längsrichtung des Eckverbinders 1 relativ zu diesem bewegt wird.

Fig. 5 zeigt in etwas stilisierter Form einen perspektivische Längsschnitt durch einen in ein Hohlkammerprofil 20 eingeführten Eckverbinder 1 mit oberhalb desselben angebrachtem Schiebekörper 2 sowie einem vorne an der Gehrungsfläche 21 angesetzten Montagewerkzeug 12. Zum leichteren Verständnis der Zeichnung ist dabei die zeichnerische Darstellung des Hohlkammerprofils 20 nur in vereinfachter Form (ohne Darstellung von Wandstärken) wiedergegeben.

Das in Fig. 5 gezeigte Montagewerkzeug 12 ist in Fig. 6 in perspektivischer Einzeldarstellung gezeigt: es besteht aus einem länglichen Hebelarm 13, der an seinem vorderen Ende einen Endabschnitt 14 aufweist, der seinerseits wiederum an seinem vorderen Ende eine runde, vorzugsweise kreisabschnittförmige, Wölbung 15 aufweist. Auf seiner Oberseite ist der Endbereich 14 eben ausgebildet und weist mittig zwei vorstehende Zinken 16 auf, die zwischen sich einen Abstand 17 ausbilden, der ausreicht, um durch ihn den länglichen Endbereich 8 des Schiebekörpers 2 hindurchzuführen.

Dieses Montagewerkzeug ist in Fig. 5 in seiner Montage-Anfangsstellung gezeigt.

Zunächst wird der Eckverbinder 1 mit auf seiner Oberseite aufliegendem Schiebekörper 2 in das Hohlkammerprofil 20 formschlüssig eingeschoben und zwar soweit, daß die Schrägfläche 3 des Eckverbinders 1 etwas gegenüber der Gehrungsfläche 21 des Hohlkammerprofiles 20 in Einschieberichtung X versetzt ist.

Der Schiebekörper 2 ragt mit seinem Endabschnitt 8 und dessen vorderem Quersteg 9 über die Gehrungsfläche 21 des Hohlkammerprofiles 20 hinaus und zwar soweit, daß er von den Gabelzinken 16 des Montagewerkzeugs 12 erfaßt werden kann, wenn dieses so, wie in Fig. 5 gezeigt, angesetzt wird.

Bei der in Fig. 5 gezeigten Montage-Ausgangsstellung (noch vor dem Fixieren des Eckverbinders 1 im Hohlprofil 20) liegen die Keilflächenpaare 5/10 und 6/11 noch locker, d.h. mit einem kleinen Spiel (siehe Fig. 5) aufeinander. Dabei wird der Eckverbinder 1 in seinem in Einschieberichtung vorne liegenden Endabschnitt unten und seitlich von einem in das Hohlkammerprofil 20 eingesetzten metallischen Formrohr 32 abgestützt, das einen rechteckigen oder quadratischen, geschlossenen Querschnitt aufweist. Dieses Formrohr 32 aus Metall erstreckt sich auch oberhalb der Oberseite des Schiebekörpers 2 und bildet zu dessen Oberseite einen kleinen Spalt aus, solange der Schiebekörper 2 noch locker auf dem Eckverbinder 1 bzw. dessen Schaftteil 4 aufliegt.

Das Zugwerkzeug 12 wird zum Erreichen der in Fig. 5 gezeigten Ausgangsstellung zunächst mit seinem verbreiterten, gewölbten Stützabschnitt 14 so angeordnet, daß es beidseits der Breite B (Fig. 2) des Eckverbinders 1 übersteht und bis auf die seitlich den Eckverbinder 1 umgebenden Flächenbereiche der Gehrungsfläche 21 des Hohlkammerprofils 20 reicht. Dabei stützt sich der Stützabschnitt 14 des Zugwerkzeugs 12 mit seiner vorderen Wölbung 15 beidseits auf der Gehrungsfläche 21 des Hohlkammerprofils 20 ab und wird in dieser Lage so nach oben geführt bis seine Gabelzinken 16 den Endbereich 8 des Schiebekörpers 2 noch vor dem Endsteg 9 beidseits umfassen.

Wird nun das Zugwerkzeug 12 um die gewölbte Endfläche 15 des Stützabschnitts 14 unter seitlicher Abstützung auf der Gehrungsfläche 21 in Richtung des in Fig. 5 gezeigten Pfeiles F nach unten verschwenkt, gelangen die Gabelzinken 16, 17 gegen die Rückseite des Endsteges 9 zur Anlage und, bei weiterer Verschwenkung, üben auf diesen eine Zugkraft Z aus, die über den Quersteg 9 auf den Schiebekörper 2 übertragen wird und eine Relativbewegung desselben zum Eckverbinder 1 auslöst. Bevor allerdings diese Relativbewegung auftritt, wandert zunächst nicht nur der Schiebekörper 2, sondern mit ihm auch noch der Eckverbinder 1 in Richtung aus dem Hohlkammerprofil 20 heraus soweit, bis die Schrägfläche 3 des Eckverbinders 1 gegen den gewölbten Endabschnitt 15 des Stützabschnitts 14 zur Anlage kommt. Da die vordere Wölbung der Stützfläche 14 über deren ganze Breite hinweg völlig gleichförmig ausgebildet ist, kommt es zu einer linienförmigen Anlage des Stützabschnitts 14 nicht nur seitlich an der Gehrungsfläche 21, sondern auch mit der Schrägfläche 3 des Eckverbinders 1, so daß dadurch automatisch die Schrägfläche 3 des Eckverbinders 1 genau dann am Stützabschnitt 14 des Zugwerkzeugs 12 zur Anlage kommt, wenn eine genaue Ausrichtung zur Gehrungsfläche 21 aufweist. Wird das Zugwerkzeug 12 dann noch weiter in Pfeilrichtung F verschwenkt, kann der Eckverbinder 1 wegen der Anlage seiner Schrägfläche 3 am Stützabschnitt 14 des Zugwerkzeugs 12 nicht mehr weiter aus dem Hohlkammerprofil 20 herauswandern, während über das fortgesetzte Verschwenken der Zinken 16 der Schiebekörper 2 noch weiter aus dem Hohlkammerprofil 20 herausgezogen wird. Nunmehr tritt eine Relativbewegung innerhalb der Gleitflächenpaarungen 5/10 und 6/11 ein mit der Folge, daß dann das Gleitstück 2 an den schrägen Stützflächen 5 und 6 über seine eigenen Keilflächen 10 und 11 nach oben wandert und dadurch gegen das metallische Einlageprofil 32 innerhalb des Hohlkammerprofils 20 zur verkeilenden Anlage kommt. Durch die Riffeln 25 an der Stützfläche 6 wird überdies (wie auch über eine geeignete Werkstoffpaarung zwischen den Werkstoffen des Schiebekörpers 2 und des Eckverbinders 1) rasch eine Selbsthemmung bei der Verkeilung erreicht.

Die verkeilte Endlage ist schließlich in Fig. 7 dargestellt. Hier ist das Zugwerkzeug 12 ganz (d. h. um ca. 90°) umgeklappt, der Schiebekörper 2 ist nunmehr deutlich relativ zum Eckverbinder 1 in Richtung aus dem Hohlkammerprofil 20 herausgezogen und dabei ein starker, selbsthemmender Verkeilungseffekt erzielt, der einen absolut festen Sitz des Eckverbinders 1 innerhalb des Hohlkammerprofils 20 bei präziser Ausrichtung der Schrägfläche 3 zur Gehrungsfläche 21 sicherstellt. Durch die Verschwenkbewegung des Zugwerkzeugs 12 ist überdies das Aufbringen erheblicher Zugkräft Z auf den Schiebekörper 2 und damit das Erreichen großer Verkeilungskräfte möglich.

In der in Fig. 7 gezeigten Endstellung des Werkzeugs 12 kann durch ein Hochschwenken desselben ein leichtes Lösen der Zinken 16, 17 vom Endabschnitt 8 des Schiebekörpers 2 erreicht werden, wonach das Abziehen des Zugwerkzeugs 12 unschwer möglich ist. Der nach Abnahme des Werkzeugs 12 noch über die Schrägfläche 3 bzw: Uie Gehrungsfläche 21 nach vorne überstehende Restabschnitts des Endbereiches 8 des Schiebekörpers 2 kann anschließend durch einen kurzen Hammerschlag von oben abgebrochen werden. Durch geeignete Anordnung einer (in den Figuren allerdings nicht dargestellten) Sollbruchstelle am Endabschnitt 8 des Schiebekörpers 2 kann ein besonders leichtes Entfernen dieses überstehenden Restabschnitts nach Beendigung der Montage erreicht werden, sogar ein Abbrechen mit der Hand ist dabei möglich. Bevorzugt wird zum Entfernen des überstehenden Endabschnitts jedoch das Zugwerkzeug 12 eingesetzt, indem dieses, bei noch zwischen den Zinken 16 hindurchgeführten Endabschnitten 8, um seine Längsachse verdreht und dadurch der Endabschnitt 8 in der Gehrungsfläche 21 abgeschert wird.

Zwei mit sochermaßen in ihnen fixierten Eckverbindungen versehene Hohlkammerprofile können sodann durch Verschweißen oder Verkleben oder in einer sonst geeigneten weise längs der Schrägflächen 3 der Eckverbinder aneinander befestigt werden.

## Patentansprüche

1. Verfahren zum Befestigen von Eckverbindern (1), vorzugsweise aus verschweißbarem Kunststoff, in auf Gehrung geschnittenen Hohlkammerprofilen von Fenstern, Türen oder dgl., bei dem jeder Eckverbinder mit einem Schaftteil (4) in ein zugeordnetes Hohlkammerprofil formschlüssig eingeschoben und in diesem mit einer dessen Gehrung entsprechender Schrägfläche (3) in Ausrichtung zur Gehrungsfläche des Hohlkammerprofiles mittels eines als Spannkeil wirkenden Schiebekörpers (2) selbsthemmend verkeilt wird, wobei der Schiebekörper zwischen einer Seitenfläche des Schaftteiles (4) des Eckverbinders und der zugeordneten Innenwand des Hohlkammerprofiles mit mindestens einer an ihm ausgebildeten Keilfläche (10, 11) entlang mindestens einer zugeordneten, an der Seitenfläche des Schaftteiles angebrachten schrägen Stützfläche (5, 6) über einen an ihm angebrachten, vorstehenden Endabschnitt (8) relativ zum Schaftteil bis zum Erreichen der gewünschten Verkeilwirkung verschoben und anschließend der überstehende Endabschnitt (8) abgetrennt wird, **dadurch gekennzeichnet, daß** der Schiebekörper (2) zum Verkeilen entgegen der Einschieberichtung (X) des Eckverbinders (1) in das Hohlkammerprofil (20) relativ zum Eckverbinder (1) verschoben wird, wobei er zum Aufbringen der Verkeilungszugkraft (Z) an seinem über die Schrägfläche (3) vorstehenden Endabschnitt (8) mit einem Zugwerkzeug (12) erfaßt wird, das einen sich quer zur Zugkraftrichtung über die Breite (B) der Schrägfläche (3) des Eckverbinders (1) hinweg bis auf die Gehrungsfläche (21) des Hohlkammerprofiles (20) erstreckenden Stützabschnitt (14) aufweist, mit dem es sich beim Aufbringen der Verkeilungszugkraft (Z) auf dieser Gehrungsfläche (21) abstützt, und wobei die Schrägfläche (3) des Eckverbinders (1) bei Erreichen ihrer zur Gehrungsfläche (21) des Hohlkammerprofiles (20) ausgerichteten Position gegen das Zugwerkzeug (12) zur Anlage kommt.

2. Verfahren nach Anspruch 1, **dadurch gekennzeichnet, daß** sich das Zugwerkzeug (12) beim Aufbringen der Verkellungszugkraft (Z) beidseits des Eckverbinders (1) an der Gehrungsfläche (21) des Hohlkammerprofiles (20) abstützt.

3. Verfahren nach Anspruch 1 oder 2, **dadurch gekennzeichnet, daß** der Schiebekörper (2) zum Verkeilen auf der Seitenfläche des Schaftteiles (4) des Eckverbinders (1) relativ zu diesem verschoben wird, die von der Schrägfläche (3) des Eckverbinders (1) - in dessen Längsschnitt gesehen - unter einem stumpfen Winkel (α) abläuft.

4. Verfahren nach einem der Ansprüche 1 bis 3, **dadurch gekennzeichnet, daß** als Zugwerkzeug (12) ein Hebelarm eingesetzt wird, der an seinem einen Ende eine Einrichtung zum Erfassen des Endabschnitts (8, 9) des Schiebekörpers (2) sowie einen gewölbten Stützabschnitt (14) aufweist, mit dem er nach Ergreifen des Schiebekörpers (2) an die Gehrungsfläche (21) des Hohlkammerprofiles (20) angelegt und um den er zum Aufbringen der Verkeilungszugkraft (Z) unter Abstützung an der Gehrungsfläche (21) verschwenkt wird.

5. Verfahren nach Anspruch 4, **dadurch gekennzeichnet, daß** der Endabschnitt des Schiebekörpers (2) in Form einer Zunge (8) mit einer Verdickung (9) an ihrem freien Ende ausgebildet ist, und daß die Einrichtung zum Erfassen des Endabschnitts (8) des Schiebekörpers (2) zwei parallele, am gewölbten Stützabschnitt (14) angebrachte Gabelzinken (16) umfaßt, zwischen welche die Zunge (8) im Bereich vor ihrer Verdickung (9) eingeführt und beim Verschwenken des Zugwerkzeugs (12) um den gewölbten Stützabschnitt (14) die Verschwenkbewegung über die Verdickung (9) der zwischen den Gabelzinken (16) aufgenommenen Zunge (8) in eine Längsbewegung des Schiebekörpers (2) umgesetzt wird.

6. Eckverbinder (1) zum Verbinden zweier auf Gehrung geschnittener, vorzugsweise aus verschweißbarem Kunststoff bestehender Hohlkammerprofile von Fenstern, Türen oder dgl., insbesondere zur Verwendung bei einem Verfahren gemäß einem der Ansprüche 1 bis 5, mit
- einem Schaftteil (4) zur Einführung in ein zugeordnetes Hohlkammerprofil (20),
- einer am Schaftteil (4) angebrachten Schrägfläche (3),
- und mit einem Schiebekörper (2), der mit mindestens einer an ihm angebrachten Keilfläche (10, 11) auf wenigstens einer entsprechend zugeordneten, an einer Seitenfläche des Schaftteiles (4) ausgebildeten schrägen Stützfläche (5, 6) relativ zum Schaftteil (4) verschiebbar ist und einen über dessen Schrägfläche (3) vorstehenden, in Form einer Zunge ausgebildeten Endabschnitt (8) zum Aufbringen der Verschiebekraft auf das in das Hohlkammerprofil (20) eingesetzte Schaftteil (4) aufweist,
wobei
die Paarung von schräger Stützfläche (5, 6) und Keilfläche (10, 11) gegenüber Kräften senkrecht zur Verschiebebewegung des Schiebekörpers (2) selbsthemmend ausgeführt ist,
**dadurch gekennzeichnet, daß** die Schrägen der mindestens einen Keilfläche (10, 11) am Schiebekörper (2) und an der mindestens einen zugeordneten schrägen Stützfläche (5, 6) am Schaftteil (4) - in Einschieberichtung (X) des Schaftteiles (4) in das Hohlkammerprofil (20) gesehen - zur Längsmittelebene (M) des Schaftteiles (2) hin abfallen,
der Schiebekörper (2) neben dem Endabschnitt (8) noch einen Verkeilungsabschnitt (7) und der Endabschnitt (8) eine geringere Breite als der Verkeilungsabschnitt (7) sowie an seinem vorstehenden Ende einen beiderseits überstehenden T-förmigen Endsteg (9) aufweisen.

7. Eckverbindung nach Anspruch 6, **dadurch gekennzeichnet, daß** mindestens eine Keilfläche (10; 11) am Schiebekörper (4) und/oder mindestens eine schräge Stützfläche (5; 6) am Schaftteil (4) mit einer quer zur Richtung der Relativbewegung zwischen Schiebekörper (2) und Schaftteil (1) angebrachten Riffelung (25) versehen ist/sind.

8. Eckverbinder nach Anspruch 6 oder 7, **dadurch gekennzeichnet, daß** zwei Keilflächen (10; 11) am Schiebekörper (2) und zwei zugeordnete schräge Stützflächen (5; 6) am Schaftteil (1) vorgesehen sind.

9. Eckverbindung nach einem der Ansprüche 6 bis 8, **dadurch gekennzeichnet, daß** der vorstehende Endabschnitt (8) des Schiebekörpers (2) mit einer Sollbruchstelle versehen ist.

10. Eckverbindung nach Anspruch 8 oder Anspruch 8 in Verbindung mit Anspruch 9, **dadurch gekennzeichnet, daß** eine Keilfläche (10) nahe bei der Schrägfläche (3) und die andere Keilfläche (11) an dem in Einschieberichtung (X) in das Hohlkammerprofil (21) vorderen Endbereich des Schaftteiles (1) vorgesehen ist.

11. Eckverbinder nach einem der Ansprüche 6 bis 10. **dadurch gekennzeichnet, daß** das Schaftteil (1) und der Schiebekörper (12) jeweils als einstückige Kunststoffteile ausgebildet sind.

## Claims

1. Method of fastening corner connectors (1), preferably of weldable plastics material, in mitre-cut hollow profiles of windows, doors or the like, in which each corner connector is positively inserted with a shank part (4) into an associated hollow profile and is wedged in a self-locking manner therein with an oblique face (3) corresponding to the mitre thereof in alignment with the mitred face of the hollow profile by means of a sliding member (2) acting as a fixing wedge, wherein the sliding member is displaced between a lateral face of the shank part (4) of the corner connector and the associated internal wall of the hollow profile with at least one wedge face (10, 11) formed thereon along at least one associated oblique support face (5, 6) arranged on the lateral face of the shank part via a projecting end portion (8) arranged thereon relative to the shank part until the desired wedge effect is achieved and the protruding end portion (8) is then severed, **characterised in that** the sliding member (2) for wedging is displaced relative to the corner connector (1) against the insertion direction (X) of the corner connector (1) into the hollow profile (20), wherein, for application of the wedging pulling force (Z) at its end portion (8) projecting beyond the oblique face (3) it is grasped by a pulling tool (12) comprising a support portion (14) which extends transverse to the pulling force direction over the width (B) of the oblique face (3) of the corner connector (1) onto the mitre face (21) of the hollow profile (20) and with which it rests on this mitre face (21) on application of the wedging pulling force (Z) and wherein the oblique face (3) of the corner connecter (1) comes to rest against the pulling tool (12) on attainment of its position aligned with the mitre face (21) of the hollow profile (20)

2. Method according to claim 1, **characterised in that** the pulling tool (12) is supported on the mitre face (21) of the hollow profile (20) on application of the wedging pulling force (Z) on both sides of the corner connector (1).

3. Method according to claim 1 or claim 2, **characterised in that** the sliding member (2), for wedging on the lateral face of the shank part (4) of the corner connector (1), is displaced relative thereto, the lateral face extending at an obtuse angle (α) from the oblique face (3) of the corner connector (1), as viewed in the longitudinal section thereof.

4. Method according to one of claims 1 to 3, **characterised in that** a lever arm is used as pulling tool (12) which, at one of its ends, comprises a device for grasping the end portion (8, 9) of the sliding member (2) and a curved support portion (14) with which it is placed on the mitre face (21) of the hollow profile (20) after grasping the sliding member (2) and round which it is pivoted for application of the wedging pulling force (Z) with support on the mitre face (21).

5. Method according to claim 4, **characterised in that** the end portion of the sliding member (2) is designed in the form of a tongue (8) with a thickened region (9) at its free end and **in that** the device for grasping the end portion (8) of the sliding member (2) comprises two prongs (16) which are arranged on the curved support portion (14), between which the tongue (8) is introduced in the region before its thickened region (9) and, on pivoting of the pulling tool (12) round the curved support portion (14), the pivoting movement is converted into a longitudinal movement of the sliding member (2) via the thickened region (9) of the tongue (8) accommodated between the prongs (16).

6. Corner connector (1) for connecting two mitre-cut hollow profiles, preferably consisting of weldable plastics material, of windows, doors or the like, in particular for use with a method according to one of claims 1 to 5, with a shank part (4) for introduction into an associated hollow profile (20), an oblique face (3) arranged on the shank part (4) and with a sliding member (2) which can be displaced relative to the shank part (4) with at least one wedge face (10, 11) arranged thereon on at least one correspondingly associated oblique support face (5, 6) formed on one lateral face of the shank part (4) and comprises an end portion (8) which projects beyond the oblique face (3) of the shank part and is designed in the form of a tongue, for application of the displacement force onto the shank part (4) inserted into the hollow profile (20), wherein the pairing of oblique support face (5, 6) and wedge face (10, 11) is self-locking in design relative to forces perpendicularly to the displacement movement of the sliding member, **characterised in that** the oblique faces of the at least one wedge face (10, 11) on the sliding member (2) and of the at least one associated oblique support face (5, 6) on the shank part (2) fall toward the longitudinal centre plane (M) of the shank part (4) - as viewed in the direction of insertion (X) of the shank part (4) into the hollow profile (20) - , the sliding member (2) comprising, in addition to the end portion (8), a further wedging portion (7) and the end portion (8) being less wide than the wedging portion (7) and comprising a T-shaped end web (9) protruding on both sides at its projecting end.

7. Corner connection according to claim 6, **characterised in that** at least one wedge face (10; 11) on the sliding member (4) and/or at least one oblique support face (5; 6) on the shank part (4) is/are provided with ribbing (25) arranged transversely to the direction of the relative movement between sliding member (2) and shank part (1).

8. Corner connector according to claim 6 or claim 7, **characterised in that** two wedge faces (10; 11) are provided on the sliding member (2) and two associated oblique support faces (5; 6) are provided on the shank part (1).

9. Corner connection according to one of claims 6 to 8, **characterised in that** the projecting end portion (8) of the sliding member (2) is provided with a set breaking point.

10. Corner connection according to claim 8 or claim 8 in conjunction with claim 9, **characterised in that** one wedge face (10) is provided close to the oblique face (3) and the other wedge face (11) is provided at the end region of the shank part (1) at the front in the direction of insertion (X) into the hollow profile (21).

11. Corner connector according to one of claims 6 to 10, **characterised in that** the shank part (1) and the sliding member (12) are each designed as integral plastics parts.

## Revendications

1. Procédé de fixation de raccord d'angle (1), de préférence en matière plastique soudable dans des profilés à chambre creuse coupés en onglet de fenêtres, portes ou similaires, dans lequel chaque raccord d'angle est introduit par concordance de forme, par une partie de tige (4), dans un profilé à chambre creuse correspondant et est coincée par autoblocage dans celui-ci par une surface oblique (3) correspondant à son onglet, orientée vers la surface en onglet du profilé à chambre creuse au moyen d'une corps coulissant (2) servant de coin de serrage, le corps coulissant étant déplacé, par rapport à la partie de tige, entre une surface latérale de la partie de tige (4) du raccord d'angle et la paroi intérieure correspondante du profilé à chambre creuse, par au moins une surface en coin (10, 11) formée sur ce corps coulissant, le long d'au moins une surface d'appui (5, 6) oblique correspondante ménagée sur la surface latérale de la partie de tige, sur une portion terminale (8) dépassante, ménagée sur ce corps coulissant, jusqu'à atteindre l'effet de coinçage voulu et ensuite la portion terminale (8) dépassante est sectionnée, **caractérisé en ce que** le corps coulissant (2) est déplacé par rapport au raccord d'angle (1) en vue du coinçage dans le sens contraire au sens d'introduction (X) du raccord d'angle (1) dans le profilé à chambre creuse (20), le corps coulissant étant saisi, pour l'application de la force de traction de coinçaqe (Z), par sa portion d'extrémité (8) dépassant de la surface oblique (3), au moyen d'un outil de traction (12) qui présente une portion d'appui (14) s'étendant transversalement à la direction de la force de traction, sur la largeur (B) de la surface oblique (3) du raccord d'angle (1), jusqu'à la surface en onglet (21) du profilé à chambre creuse (20), portion d'appui par laquelle l'outil de traction prend appui sur cette surface en onglet (21), lors de l'application de la force de traction de coinçage (Z), et la surface oblique (3) du raccord d'angle (1) venant s'appliquer contre l'outil de traction (12), lorsqu'est atteinte sa position orientée vers la surface en onglet (21) du profilé à chambre creuse (20).

2. Procédé selon la revendication 1, **caractérisé en ce que** l'outil de traction (12) prend appui des deux côtés du raccord d'angle (1) contre la surface en onglet (21) du profilé à chambre creuse (20), lorsqu'est appliquée la force de traction de coinçage (Z).

3. Procédé selon la revendication 1 ou 2, **caractérisé en ce que** pour le coinçage sur la surface latérale de la partie de tige (4) du raccord d'angle (1), le corps coulissant (2) est déplacé par rapport à celle-ci, qui s'étend sous un angle obtus (α) depuis la surface oblique du raccord d'angle (1) -vue en coupe longitudinale-.

4. Procédé selon l'une des revendications 1 à 3, **caractérisé en ce qu'**on utilise comme outil de traction (12) un bras de levier qui présente, à l'une de ses extrémités, un dispositif destiné à saisir la portion terminale (8, 9) du corps coulissant (2) ainsi qu'une portion d'appui (14) bombée, par lequel, après saisie du corps coulissant (2), il est appliqué contre la surface en onglet (21) du profilé à chambre creuse (20), et autour de laquelle il est pivoté pour l'application de la force de traction de coinçage (Z), par appui contre la surface en onglet (21).

5. Procédé selon la revendication 4, **caractérisé en ce que** la portion terminale du corps coulissant (2) a la forme d'une languette (8) avec une surépaisseur (9) à son extrémité libre et **en ce que** le dispositif destiné à saisir la portion terminale (8) du corps coulissant (2) comprend deux dents de fourche (16) ménagées sur la portion d'appui (14) bombée, entre lesquelles est introduite la languette (8), dans la région située devant sa surépaisseur (9) et **en ce que** lors du pivotement de l'outil de traction (12) autour de la portion d'appui (14) bombée, le mouvement de pivotement est converti, par la surépaisseur (9) de la languette (8) logée entre les dents de fourche (16), en un mouvement longitudinal du corps coulissant (2).

6. Raccord d'angle (1) pour l'assemblage de deux profilés à chambre creuse de fenêtres, portes ou similaires, coupés en onglet, réalisés de préférence en matière plastique soudable, en particulier pour utilisation dans un procédé selon l'une des revendications 1 à 5, comportant
- une partie de tige (4) pour l'introduction dans un profilé à chambre creuse (20) correspondante,
- une surface oblique (3) ménagée sur la partie de tige (4)
- ainsi qu'un corps coulissant (2) qui peut coulisser par rapport à la partie de tige (4), par au moins une surface de coin (10, 11) ménagée sur lui, sur au moins une surface d'appui (5, 6) oblique correspondante, formée sur une surface latérale de la partie de tige (4), et présente une portion terminale (8) dépassant sa surface oblique (3), sous la forme d'une languette, en vue de l'application de la force de déplacement sur la partie de tige (4) insérée dans le profilé à chambre creuse (20),
- l'association de la surface d'appui oblique (5, 6) et de la surface de coin (10, 11) étant réalisée autobloquante par rapport à des forces perpendiculaires au mouvement de déplacement du corps coulissant (2),
**caractérisée en ce que** les parties obliques de la ou des surfaces de coin (10 ; 11) sur le corps coulissant (2) et de la ou des surfaces d'appui obliques (5 ; 6) correspondantes sur la partie de tige (4) descendent vers le plan médian longitudinal (M) de la partie de tige (4) vu dans le sens d'introduction (X) de la partie de tige (4) dans le profilé à chambre creuse (20),
- le corps couplissant (2) présente, outre la portion terminale (8) encore une portion de coinçage (7) et la portion terminale (8) présente une largeur plus faible que la portion de coinçage (7) ainsi qu'une traverse terminale en forme T (9), dépassant des deux côtés, à son extrémité dépassante.

7. Raccord d'angle selon la revendication 6, **caractérisé en ce qu'**au moins une surface de coin (10 ; 11) du corps coulissant (2) et/ou au moins une surface d'appui oblique (5 ; 6) sur la partie de tige (4) est/sont pourvues d'une cannelure (25) pratiquée transversalement à la direction du déplacement relatif entre le corps coulissant et la partie de tige (4).

8. Raccord d'angle selon la revendication 6 ou 7, **caractérisé en ce que** deux surfaces de coin (10 ; 11) sont prévues sur le corps coulissant (2) et deux surfaces d'appui obliques (5 ; 6) correspondantes sont prévues sur la partie de tige (4).

9. Raccord d'angle selon l'une des revendications 6 à 8, **caractérisé en ce que** la portion terminale (8) dépassant du corps coulissant (2) est pourvue d'un emplacement destiné à la rupture (24).

10. Raccord d'angle selon la revendication 8 ou selon la revendication 8 en combinaison avec la revendication 9, **caractérisé en ce qu'**une surface de coin (10) et prévue à proximité de la surface oblique (3) et l'autre surface de coin (11) est prévue dans la zone d'extrémité avant de la partie de tige (1) dans le sens (X) d'introduction dans le profilé à chambre creuse (20).

11. Raccord d'angle selon l'une des revendications 6 à 10, **caractérisé en ce que** la partie de tige (4) et le corps coulissant (2) sont réalisés chacun en tant que pièces en matière plastique d'un seul tenant.
